# EUROPÄISCHE PATENTSCHRIFT

(11) **EP 0 937 228 B1**
(45) Veröffentlichungstag und Bekanntmachung des Hinweises auf die Patenterteilung: **05.06.2002**
(21) Anmeldenummer: 98947525.6
(22) Anmeldetag: 04.09.1998
(51) Int. Cl.: G01B 11/08

(54) **MESSGERÄT ZUM SCANNEN VON MASSEN, INSBES. DURCHMESSERN**
MEASURING DEVICE FOR SCANNING DIMENSIONS, ESPECIALLY DIAMETERS
APPAREIL DE MESURE POUR L'ANALYSE DE GRANDEURS CARACTERISTIQUES, NOTAMMENT DE DIAMETRES

(30) Priorität: 05.09.1997 DE 19738977
(43) Veröffentlichungstag der Anmeldung: 25.08.1999
(73) Patentinhaber: Blum-Novotest GmbH, 88287 Grünkraut (DE)
(72) Erfinder: BLUM, Günther, D-88212 Ravensburg (DE)
(74) Vertreter: Goetz, Rupert, Dipl.-Ing.
(86) Internationale Anmeldenummer: EP9805647
(87) Internationale Veröffentlichungsnummer: WO9913292

(56) Entgegenhaltungen:
- EP-A- 0 439 907
- DE-A- 3 630 702
- US-A- 3 555 288
- US-A- 3 749 500

## Beschreibung

Die Erfindung betrifft ein Meßgerät nach dem Oberbegriff des Anspruchs 1.

Ein bekanntes Meßgerät dieser Gattung (DE 42 24 253 C1), das zum Messen von Zylindern für Druckmaschinen vorgesehen ist, weist einen Schlitten auf, der unterhalb einer auf zwei Schienen laufenden Brücke einer Krananlage parallel zu dieser angeordnet ist. Von der Brücke ragen zwei Führungen nach unten, an denen der Schlitten senkrecht verschiebbar geführt ist. Außerhalb des Zwischenraumes zwischen den beiden Führungen ist eine Wegmeßeinrichtung zum Messen senkrechter Bewegungen des Schlittens angeordnet. Der Schlitten bildet eine Quertrasse, auf der eine Haltevorrichtung parallel zur Brücke, also waagerecht, verschiebbar ist. An der Haltevorrichtung ist ein zweischenkliger Bügel zwischen einer Betriebsstellung und einer Ruhestellung hin- und herschwenkbar gelagert. In der Betriebsstellung ragen die beiden Bügelschenkel senkrecht nach unten, so daß der Bügel ein umgekehrtes, unten offenes U-bildet. In der Ruhestellung erstrecken sich die Bügelschenkel waagerecht, parallel zur Quertrasse des Bügels. An den Enden der beiden Bügelschenkel sind ein Sende- bzw. Empfangselement einer Lichtschranke angeordnet; der Abstand dieser Elemente ist größer als der größte zu erwartende Durchmesser der zu vermessenden Druckzylinder. Der zu vermessende Druckzylinder wird unterhalb der Quertrasse des Schlittens und parallel zu ihr auf einer Halterung derart angeordnet, daß der in seine Betriebsstellung nach unten geschwenkte Bügel beim Absenken des Schlittens den Druckzylinder umgreift, wobei die Strecke, um die der Schlitten abgesenkt wird, während der Druckzylinder die die Lichtschranke unterbricht, wird als Maß für den Durchmesser des Druckzylinders gewertet.

Es ist ferner ein Gerät zum photoelektrischen Klassifizieren von Gegenständen wie Abschnitten von Baumstämmen bekannt (US-A-3,555,288), bei dem die Gegenstände auf einer Führung durch eine U-förmiges, ortsfestes Gestell hindurchbewegbar sind. Das Gestell weist zwei hohle Schenkel auf, die sich von einer ebenfalls hohlen waagerechten Traverse senkrecht nach oben erstrecken und je eine senkrechte Führungsstange enthalten. Längs dieser beiden Führungsstangen ist je ein Schlitten auf- und abbewegbar; einer dieser Schlitten trägt einen Sender und der andere einen Empfänger einer waagerechten Lichtschranke, die durch den zu messenden Gegenstand unterbrochen wird. Als gemeinsamer Antrieb für die beiden Schlitten ist in der Traverse ein Motor angeordnet; dieser treibt über ein Zahnradgetriebe zwei Kettentriebe an, die in je einem der beiden Schenkel des Gestells angeordnet und mit je einem der beiden Schlitten verbunden sind.

Mit beiden im vorstehenden beschriebenen Geräten lassen sich entsprechend ihrer Konstruktion und ihrem Verwendungszweck nur begrenzte Meßgenauigkeiten erzielen.

Der Erfindung liegt die Aufgabe zugrunde, ein Meßgerät zum Scannen von Maßen, insbes. Durchmessern zu schaffen, dessen Meßsignale mit geringem Rechneraufwand auswertbar sind und dennoch zu genauen Meßergebnissen führen.

Die Aufgabe ist erfindungsgemäß mit den Merkmalen des Anspruchs 1 gelöst. Vorteilhafte Weiterbildungen ergeben sich aus den Unteransprüchen.

Ausführungsbeispiele der Erfindung werden im folgenden anhand schematischer Zeichnungen mit weiteren Einzelheiten erläutert. Es zeigen:
- Fig. 1: ein erfindungsgemäßes Meßgerät in Seitenansicht,
- Fig. 2: die Stirnansicht in Richtung des Pfeils II in Fig. 1,
- Fig. 3: den senkrechten Querschnitt III-III in Fig. 1,
- Fig. 4: den senkrechten Längsschnitt IV-IV in Fig. 3,
- Fig. 5: eine Ausführungsvariante des erfindungsgemäßen Meßgerätes in einer der Fig. 1 entsprechenden Seitenansicht und
- Fig. 6: die Ausführungsvariante gemäß Fig. 5 in einer der Fig. 2 entsprechenden Stirnansicht.

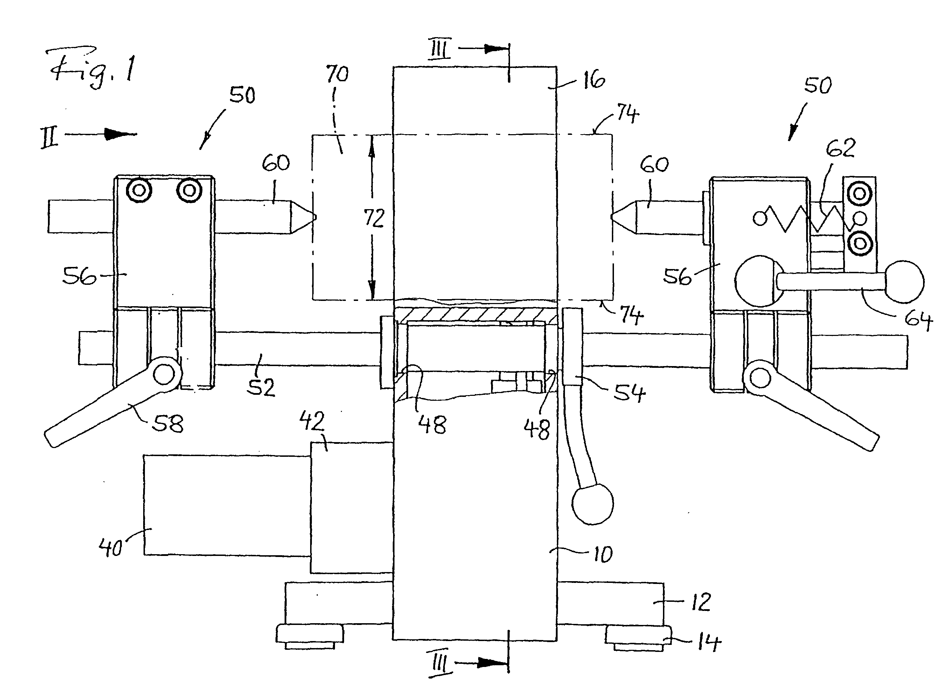

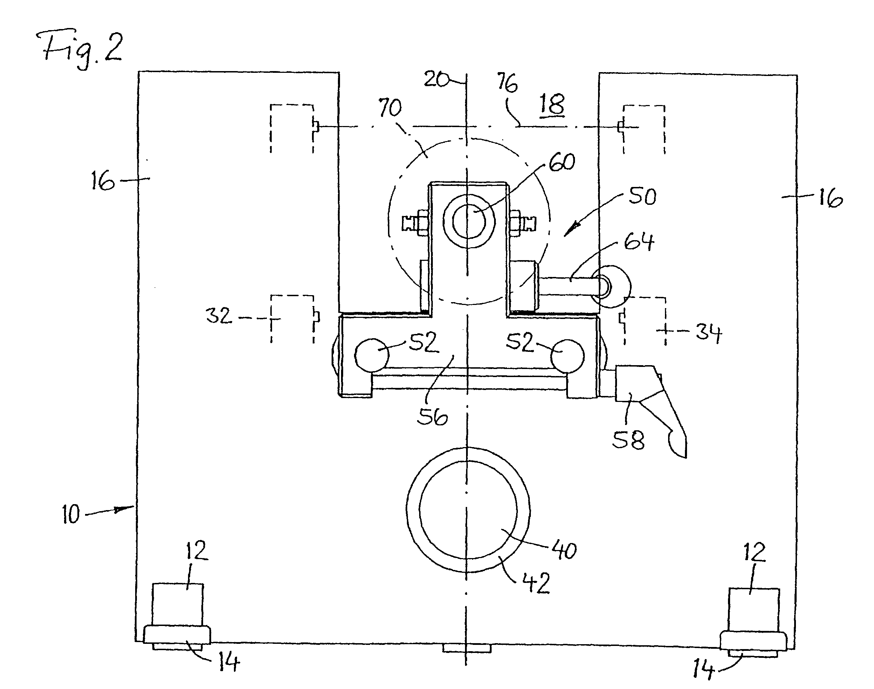

Das in Fig. 1 bis 4 dargestellte Meßgerät hat ein Gehäuse 10, das in Stirnansicht gemäß Fig. 2 U-förmig ist und vier Beine 12 mit je einem elastischen Fuß 14 aufweist. Das Gehäuse 10 hat zwei hohle quaderförmige Türme 16, die durch einen ebenfalls quaderförmigen Zwischenraum 18 voneinander getrennt sind. Das ganze Gehäuse 10 und die meisten seiner Einbauten sind in bezug auf eine senkrechte Mittelebene 20 symmetrisch gestaltet. Die beiden Türme 16 sind durch je einen senkrechten Schlitz 22 zum Zwischenraum 18 hin geöffnet.

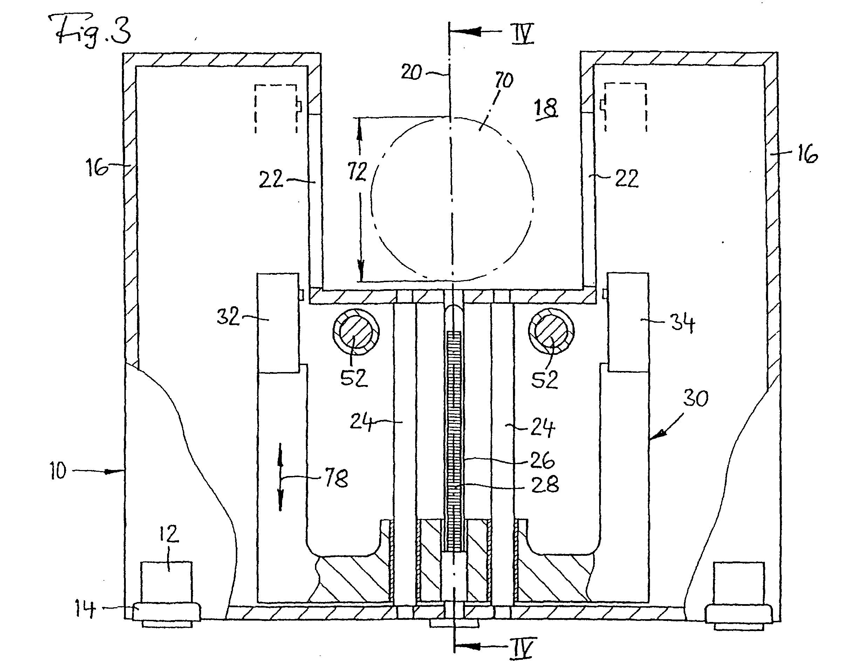

Innerhalb des mittleren Bereichs des Gehäuses 10 sind, symmetrisch zur Mittelebene 20, ein Paar Säulen 24 und, zwischen diesen, ein Maßstabträger 26 mit einem darauf angeordneten inkrementalen Maßstab 28 senkrecht angeordnet. Die Säulen 24 führen einen senkrecht verschiebbaren Schlitten 30, der entsprechend dem Gehäuse 10 gemäß Fig. 3 U-förmig ist. Auf dem Schlitten 30 sind, auf je einer Seite der Mittelebene 20, ein Sender 32 und ein Empfänger 34 für Laserstrahlen mit den Schlitzen 22 fluchtend angeordnet. Der Schlitten 30 trägt ferner, in seinem mittleren unteren Bereich, einen Abtastkopf 36, der zusammen mit dem Maßstab 28 eine digitale Wegmeßeinrichtung bildet.

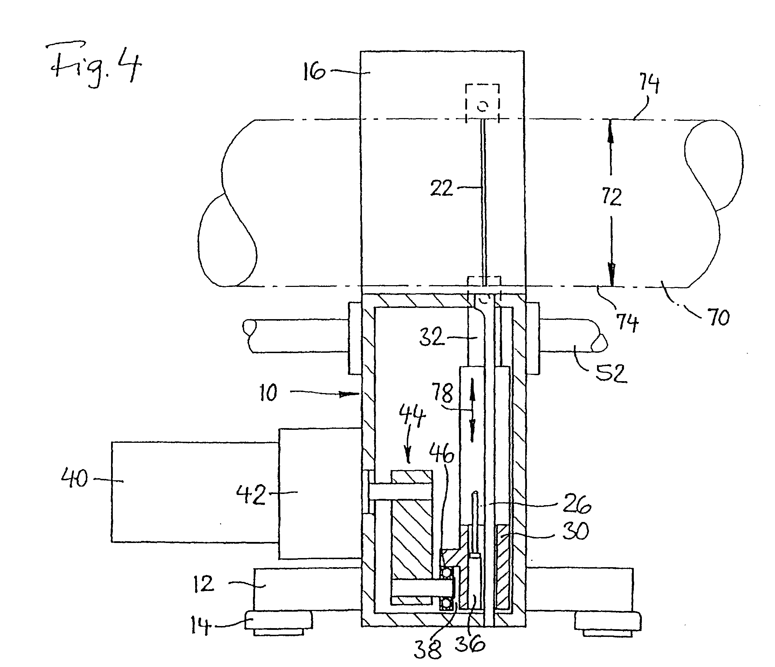

An einer Seite des Schlittens 30 ist eine längsgerichtete, zur Zeichnungsebene der Fig. 1 und 4 parallele, waagerechte Nut 38 ausgebildet. An das Gehäuse 10 ist ein Motor 40 angebaut, der vorzugsweise ein elektrischer Gleichstrommotor ist und über ein Untersetzungsgetriebe 42 und einen innerhalb des Gehäuses 10 angeordneten Kurbeltrieb 44 eine Laufrolle 46 antreibt, welche in die waagerechte Nut 38 eingreift, so daß der Schlitten 30 bei laufendem Motor 40 senkrecht aufund niedergehende Bewegungen ausführt.

Das Gehäuse 10 hat ferner ein Paar waagerechte Durchlässe 48, die sich in Längsrichtung, parallel und symmetrisch zur Mittelebene 20 erstrecken und als Abstützungen für eine Halterung 50 dienen. Im dargestellten Beispiel weist die Halterung 50 zwei parallele waagerechte Stangen 52 auf, die mittels einer Klemmvorrichtung 54 am Gehäuse 10 auswechselbar festgeklemmt sind und zwei Abstützungen 56 tragen, welche längs der Stangen 52 einstellbar und mittels je eines Knebels 58 festklemmbar sind.

Bei dem in Fig. 1 bis 4 dargestellten Meßgerät tragen die beiden Abstützungen 56 je einen Dorn 60, dessen Spitze in der senkrechten Mittelebene 20 liegt. Einer der Dorne 60 ist in seiner Abstützung 56 längsverschiebbar geführt, durch eine Feder 62 zum Gehäuse 10 hin vorgespannt und mittels eines Knebels 64 abhebbar. Der andere Dorn 60 ist an der zugehörigen Abstützung 56 in einer wählbaren Stellung von vorneherein festgeklemmt.

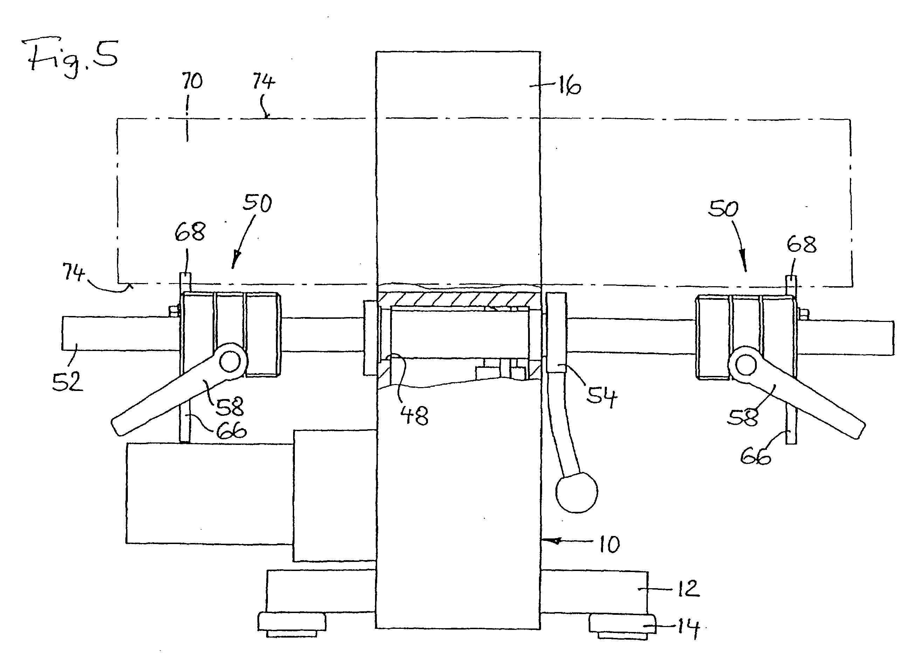

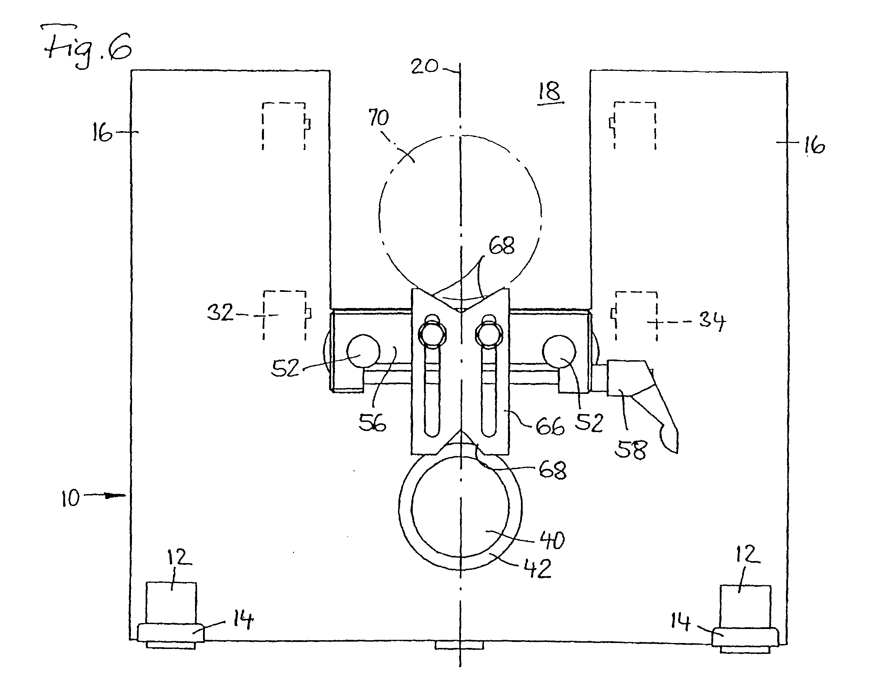

Das Meßgerät gemäß Fig. 5 und 6 unterscheidet sich von dem in Fig. 1 bis 4 dargestellten nur dadurch, daß die beiden Abstützungen 56 anstelle je eines Dorns 60 je eine höheneinstellbare Platte 66 tragen, an der Auflageprismen 68 ausgebildet sind.

Gemäß Fig. 1 bis 4 wird ein Meßobjekt 70, dargestellt ist eine zylindrische Welle, zwischen den Dornen 60 zentrisch eingespannt; gemäß Fig. 5 und 6 wird das Meßobjekt 70, wiederum eine zylindrische Welle, hingegen auf zwei der Auflageprismen 68 aufgelegt. In beiden Fällen ist das Meßobjekt 70 symmetrisch in bezug auf die Mittelebene 20 des Meßgerätes derart angeordnet, daß ein an dem Meßobjekt 70 zu messendes Maß 72, im dargestellten Beispiel ein in der Mittelebene 20, also senkrecht, zu messender Durchmesser, im Höhenbereich zwischen den unteren und den oberen Enden der Schlitze 22 liegt. Das Maß 72 wird dadurch ermittelt, daß die in Seitenansicht gemäß Fig. 1, 4 und 5 sichtbaren Konturen 74 des Meßobjekts 70 mit einem vom Sender 32 ausgesandten und durch die Schlitze 22 hindurchtretenden Energiestrahl 76 abgetastet werden. Der Energiestrahl 76 ist vorzugsweise ein Laserstrahl im Rotlichtbereich, der in der Mittelebene 20 fokussiert ist.

Nachdem ein Meßobjekt gemäß Fig. 1 bis 4 zwischen den Dornen 60 eingespannt oder gemäß Fig. 5 und 6 auf zwei Auflageprismen 68 aufgelegt worden ist, wird der Sender 32 eingeschaltet und der Motor 40 für eine Zeitspanne in Gang gesezt, während welcher der Kurbeltrieb 44 mindestens eine vollständige Umdrehung ausführt. Dabei wird der Schlitten ausgehend von seiner in Fig. 3 und 4 mit vollen Linien gezeichneten unteren Totpunktstellung in Richtung des Pfeils 78 nach oben in seine mit gestrichelten Linien angedeutete obere Totpunktstellung, und zurück in seine untere Totpunktstellung bewegt. Während der Aufwärtsbewegung wird der vom Sender 32 in einer zur Mittelebene 20 normalen Richtung ausgesandte und zunächst vom Empfänger 34 empfangene Energiestrahl 76 vom Meßobjekt 70 unterbrochen; die von der Wegmeßeinrichtung 28, 36 ermittelte Stellung des Schlittens 30, bei der dies geschieht, entspricht der Lage der unteren Kontur 74 des Meßobjekts 70 und wird gespeichert. Im weiteren Verlauf der Aufwärtsbewegung des Schlittens 30 wird der vom Sender 32 unverändert ausgesandte Energiestrahl 76, sobald er die obere Kontur 74 des Meßobjekts 70 erreicht hat, vom Empfänger 34 wieder empfangen und die von der Wegmeßeinrichtung 28, 36 ermittelte Stellung des Schlittens 30, bei der dies geschieht, wird wiederum gespeichert. Aus den gespeicherten Werten ergibt sich das Maß 72, im dargestellten Beispiel der Durchmesser, des Meßobjekts 70. Bei der Abwärtsbewegung des Schlittens 30 können die Messungen wiederholt und deren Ergebnisse mit den beim Aufwärtshub gewonnenen Meßergebnissen interpoliert werden.

Es lassen sich auch Meßprogramme wählen, bei denen der Schlitten 30 mehrere Auf- und Abwärtsbewegungen durchführt und bei denen eine entsprechend größere Auswahl Meßergebnisse gewonnen und schließlich interpoliert werden.

## Patentansprüche

1. Meßgerät zum Scannen von Maßen, insbes. Durchmessern, von Meßobjekten (70), mit
- einer Führung, die eine Mittelebene (20) des Meßgerätes definiert,
- einer Halterung (50), mit der sich ein Meßobjekt (70) in der Mittelebene (20) in einer Stellung halten läßt, in der sich ein interessierendes Maß (72) parallel zur Führung erstreckt, - einem Schlitten (30), der auf einer Seite der Mittelebene (20) einen Sender (32), und auf der anderen Seite einen Empfänger (34), für einen quer zur Mittelebene (20) und zum interessierenden Maß (72) verlaufenden Energiestrahl (76) trägt,
- einer Vorrichtung (40-46) zum Bewegen des Schlittens (30) längs der Führung,
- einer Wegmeßeinrichtung (26,28,36) zum Messen der Bewegungen des Schlittens (30) längs der Führung, und
- einer Auswerteinrichtung, die aus Stellungen des Schlittens (30), in denen der zunächst vom Empfänger (34) empfangene Energiestrahl (76) vom Meßobjekt (70) unterbrochen, und dann wieder empfangen wird, das interessierende Maß (72) ermittelt,
**dadurch gekennzeichnet, daß**
- der Energiestrahl (76) auf die Mittelebene (20) fokussiert ist, und
- die Wegmeßeinrichtung (26,28,36) einen in der Mittelebene (20) angeordneten Maßstabträger (26) aufweist.

2. Meßgerät nach Anspruch 1,
**dadurch gekennzeichnet, daß** der Engergiestrahl (76) ein Laserstrahl ist.

3. Meßgerät nach Anspruch 1 oder 2,
**dadurch gekennzeichnet, daß** der Schlitten (30) an einem Paar Säulen (24) geführt ist, die auf je einer Seite der Mittelebene (20) angeordnet sind.

4. Meßgerät nach einem der Ansprüche 1 bis 3,
**dadurch gekennzeichnet, daß** die Halterung (50) ein Paar Stangen (52) aufweist, die sich auf je einer Seite der Mittelebene (20) parallel zu dieser erstrecken und einstellbare Abstützungen (56) für das Meßobjekt (70) tragen.

5. Meßgerät nach einem der Ansprüche 1 bis 4,
**dadurch gekennzeichnet, daß** der Schlitten (30) von einem Motor (40) über einen Kurbeltrieb (44) antreibbar ist.

## Claims

1. A measuring instrument to scan dimensions, especially diameters of objects to be measured (70), comprising
- a guide means which defines a center plane (20) of the measuring instrument,
- a retaining fixture (50) adapted to hold an object to be measured (70) in the center plane (20) in such position that a dimension of interest (72) will extend parallel to the guide means,
- a carriage (30) supporting a transmitter (32) at one side of the center plane (20) and a receiver (34) at the other side for an energy beam (76) which passes transversely of the center plane (20) and of the dimension of interest (72),
- a mechanism (40 - 46) for moving the carriage (30) along the guide means,
- a distance measuring means (26, 28, 36) to measure movements of the carriage (30) along the guide means, and
- an evaluating means to determine the dimension of interest (72) based on positions of the carriage (30) at which the energy beam (76), first received by the receiver (34), is interrupted by the object to be measured (70) and then again received,
**characterized in that**
- the energy beam (76) is focussed on the center plane (20), and
- the distance measuring means (26, 28, 36) carries a rule member (26) which is disposed in the center plane (20).

2. The measuring instrument as claimed in claim 1,
**characterized in that** the energy beam (76) is a laser beam.

3. The measuring instrument as claimed in claim 1 or 2,
**characterized in that** the carriage (30) is guided on a pair of pillars (24) disposed at either side of the center plane (20).

4. The measuring instrument as claimed in one of claims 1 to 3, **characterized in that** the retaining fixture (50) comprises a pair of rods (52) which extend at either side of the center plane (20) and parallel to the same and which carry adjustable brackets (56) for the object to be measured (70).

5. The measuring instrument as claimed in one of claims 1 to 4, **characterized in that** the carriage (30) is adapted to be driven by a motor (40) via a crank drive (44).

## Revendications

1. Instrument de mesure pour relever des dimensions, en particulier des diamètres d'objets à mesurer (70), comprenant
- un guide qui définit un plan médian (20) de l'instrument de mesure,
- un dispositif de maintien (50), à l'aide duquel un objet à mesurer (70) peut être maintenu dans le plan médian (20) dans une position dans laquelle une mesure (72) présentant un intérêt s'étend parallèlement au guide,
- un chariot (30) qui porte d'un côté du plan médian (20) un émetteur (32), et sur l'autre côté un récepteur (34), pour un rayonnement énergétique (76) s'étendant transversalement au plan médian (20) et à la dimension (72) présentant un intérêt,
- un dispositif (40-46) pour déplacer le chariot (30) le long du guide,
- un système de mesure de trajet (26, 28, 36) pour mesurer les déplacements du chariot (30) le long du guide, et
- un dispositif d'évaluation qui détermine, à partir de positions du chariot (30), dans lesquelles le rayonnement énergétique (76) d'abord reçu par le récepteur (34) a été interrompu par l'objet à mesurer (70) et a ensuite été à nouveau reçu, la dimension (72) présentant un intérêt **caractérisé en ce que**
- le rayonnement énergétique (76) est focalisé sur le plan médian (20), et
- le dispositif de mesure de trajet (26, 28, 36) présente un support d'échelle graduée (26) disposé dans le plan médian (20).

2. Instrument de mesure selon la revendication 1, **caractérisé en ce que** le rayonnement énergétique (76) est un rayon laser.

3. Instrument de mesure selon la revendication 1 ou 2, **caractérisé en ce que** le chariot (30) est guidé sur une paire de colonnes (24) qui sont disposées chacune d'un côté du plan médian (20).

4. Instrument de mesure selon l'une quelconque des revendications 1 à 3, **caractérisé en ce que** le dispositif de maintien (50) présente une paire de barres (52) qui s'étendent parallèlement au plan médian (20) chacune d'un côté de celui-ci et soutiennent des appuis (56) réglables pour l'objet à mesurer (70).

5. Instrument de mesure selon l'une quelconque des revendications 1 à 4, **caractérisé en ce que** le chariot (30) peut être mû par un moteur (40) par l'intermédiaire d'une commande par bielle-manivelle (44).
